# EUROPÄISCHE PATENTSCHRIFT

(11) **EP 1 488 720 B1**
(45) Veröffentlichungstag und Bekanntmachung des Hinweises auf die Patenterteilung: **17.08.2005**
(21) Anmeldenummer: 03291474.9
(22) Anmeldetag: 18.06.2003
(51) Int. Cl.: A47J 36/10, A47J 37/12

(54) **Tiegel mit Deckel und Verriegelungsmechanismus**
Crucible with cover and closing mechanism
Creuset avec couvercle et mécanisme de fermeture

(43) Veröffentlichungstag der Anmeldung: 22.12.2004
(73) Patentinhaber: FRIMA S.A., 68271 Wittenheim Cedex (FR); Rational AG, 86899 Landsberg/Lech (DE)
(72) Erfinder: Wagner, Stefan, 68127 Oberhergheim (FR); Michineau, Serge, 68190 Ensisheim (FR); Wiedemann, Peter, 86836 Klosterlechfeld (DE)
(74) Vertreter: Weber-Bruls, Dorothée, Dr.

(56) Entgegenhaltungen:
- EP-A- 0 721 758
- DE-C- 565 435
- DE-U- 8 610 225
- GB-A- 535 392
- US-A- 4 213 310
- US-A1- 2002 038 804

## Beschreibung

Die vorliegende Erfindung betrifft einen Tiegel mit einem darauf bewegbaren, insbesondere klappbaren oder verschwenkbaren, und verschließbaren Deckel, insbesondere für ein Gargerät, mit einem Verriegelungsmechanismus, wobei zumindest ein erstes Verriegelungselement an dem Deckel und zumindest ein zweites Verriegelungselement an dem Tiegel in zueinander in Eingriff bringbarer Anordnung angebracht sind, sowie ein Gargerät, bei dem ein solcher Tiegel verwendet werden kann.

Aus dem allgemeinen Stand der Technik sind Gargeräte bekannt, in denen ein oder mehrere Tiegel vorhanden ist bzw. sind, in dem bzw. denen Gargut, wie beispielsweise Gulasch, Reis, oder dergleichen, gegart werden kann. Für bestimmte Garverfahren innerhalb dieser Tiegel und insbesondere zum Energiesparen umfassen solche Tiegel in der Regel einen Deckel, der über ein Scharnier oder dergleichen zum Verschließen des Tiegels auf diesen herunterklappbar und zum Öffnen des Tiegels hochklappbar ausgestaltet ist. Solche Tiegel mit Deckel umfassen in der Regel einen Verriegelungsmechnismus, beispielsweise in der Form eines Hakens an dem Deckel und eines Bolzens an dem Tiegel, so dass beim Schließen des Deckels auf den Tiegel der Haken den Bolzen umgreift und somit einen sicheren Verschluss des Tiegels ermöglicht. Zum Öffnen des Deckels kann entweder eine Öffnungsvorrichtung betätigt oder der Haken, sofern er drehbeweglich ausgestaltet ist, seitlich etwas verdreht werden, um den Eingriff zwischen Bolzen und Haken zu lösen. Gargeräte mit solchen Tiegeln finden insbesondere in Großküchen Anwendung, wo große Mengen an Nahrungsmitteln in kurzer Zeit zubereitet werden müssen.

Ein Verriegelungsmechanismus für einen Klappdeckel an sich ist beispielsweise aus der DE 685 582 bekannt, wonach ein Verschluss für einen Klappdeckel eine mit einem Betätigungshebel versehene Welle aufweist, auf der ein oder mehrere Riegelhebel und eine oder mehreren Nocken sitzen, die beim Öffnen des Verschlusses gegen am Klappdeckel befestigte Anschläge stoßen und dadurch den Deckel anheben.

Es ist ohne weiteres vorstellbar, dass das Ver- und Entriegeln bei solchen Tiegeln sowohl manuell als auch automatisch stattfinden kann. Beim Verschließen des Tiegels kann es bei Unachtsamkeit durchaus vorkommen, dass die Finger einer Bedienperson, sowohl beim manuellen als auch beim automatischen Verschließen, zwischen dem Haken und dem Bolzen eingeklemmt und verletzt werden können. Insbesondere wenn ein schnelles Arbeiten in der Großküche erforderlich ist, werden von der Bedienperson solche Verletzungsmöglichkeiten häufig nicht entsprechend beachtet, beispielsweise wenn eine Bedienperson mehrere Tiegel bzw. Gargeräte gleichzeitig zu betreuen hat und jedem Einzelnen nicht ausreichend Beachtung schenkt.

Aus der US 2002/0038804 A1 ist ein Verriegelungsmechanismus zum Verriegeln eines gattungsgemäßen Tiegels mit einem Deckel bekannt, beispielsweise in Form einer Thermoskanne. Die Kanne umfaßt ein erstes Verriegelungselement an dem Deckel sowie ein zweites Verriegelungselement an der Kanne, die miteinander in Eingriff gebracht werden können, wobei die beiden Verriegelungselemente so angeordnet sind, daß sie bei Eingriff ineinander innerhalb der Kanne bereitgestellt sind. Die Kanne umfaßt ferner einen Druckknopf, der sich über die Oberseite des Deckels zumindest teilweise erstreckt und über den die Entriegelung der beiden Verriegelungselemente bewerkstelligt werden kann.

Die EP 0 271 758 A1 beschreibt einen Tiegel für ein Gargerät, nämlich eine Hauhaltsfriteuse, die einen verschließbaren Deckel umfaßt. Zum Verschließen des Tiegels mit dem Deckel wird ein Verriegelungsmechanismus eingesetzt, bei dem ein erstes Verriegelungselement, ein Balken, an dem Deckel und ein zweites Verriegelungselement, ein Einhakfinger, an dem Tiegel angeordnet sind. Bei geöffnetem Deckel liegen die Einhakfinger am Tiegel völlig ungeschützt vor.

Aus der DE 8610225 U ist ein Verriegelungsmechanismus für einen Behälter mit einem Dekkel bekannt, bei dem die Bewegung eines Tragegriffs den Eingriff eines ersten und eines zweiten Verriegelungselements bei geschlossenem Deckel ermöglicht.

Schließlich ist aus der US 4,213,310 A ein Behälter zur Aufrechterhaltung der Temperatur von darin eingestellten Inhalten bekannt, welcher Behälter einen Verriegelungsmechanismus aufweist, bei dem ein erstes bzw. ein zweites Verriegelungselement und eine Schutzabdekkung über einen gemeinsamen Achsstift befestigt sind.

Der vorliegenden Erfindung liegt somit die Aufgabe zugrunde, den gattungsgemäßen Tiegel derart weiterzuentwickeln, dass er die Nachteile des Stands der Technik überwindet. Dabei soll ein Tiegel bereitgestellt werden, der eine Verletzungsgefahr insbesondere beim Verschließen des Tiegels mit einem Deckel über einen Verriegelungsmechanismus minimiert bzw. vollständig vermeidet.

Diese Aufgabe wird erfindungsgemäß dadurch gelöst, dass zumindest das erste oder das zweite Verriegelungselement eine bewegbare Schutzabdeckung aufweist, durch die das erste bzw. zweite Verriegelungselement zumindest bei geöffnetem Deckel abgedeckt und bei geschlossenem Deckel ein Angriff des ersten Verriegelungselements an das zweite Verriegelungselement ermöglicht ist, wobei das erste und zweite Verriegelungselement auf einer Außenseite des Tiegels bzw. des Deckels angeordnet sind.

Dabei kann vorgesehen sein, dass das erste Verriegelungselement als ein Haken, ein Schnapper oder dergleichen, und das zweite Verriegelungselement als ein Vorsprung, wie ein Bolzen, ein Stift oder dergleichen, oder als eine Aussparung ausgeformt ist, oder das zweite Verriegelungselement als ein Haken, ein Schnapper oder dergleichen, und das erste Verriegelungselement als ein Vorsprung, wie ein Bolzen, ein Stift oder dergleichen, oder als eine Ausnehmung ausgeformt ist.

Bevorzugt ist erfindungsgemäß, dass die Schutzabdeckung im Wesentlichen die Form einer flachen Platte, insbesondere mit einer an die Außenkontur des ersten bzw. zweiten Verriegelungselements angepaßten Außenkontur, aufweist, wobei die Form eines Dackelohres bevorzugt ist.

Erfindungsgemäß bevorzugt ist des Weiteren, dass die Schutzabdeckung zumindest das erste bzw. zweite Verriegelungselement vollständig abdeckt.

Bei manchen Ausführungsformen der Erfindung kann vorgesehen sein, dass die Schutzabdekkung das erste bzw. zweite Verriegelungselement bei geschlossenen Deckel freigibt.

Ferner kann vorgesehen sein, dass der Deckel manuell oder automatisch, vorzugsweise über eine Steuer- und/oder Regeleinheit, bewegbar ist.

Es kann erfindungsgemäß weiterhin vorgesehen sein, dass das erste bzw. zweite Verriegelungselement und die Schutzabdeckung über einen gemeinsamen Achsstift an dem Deckel befestigt sind.

Die Schutzabdeckung kann gegenüber dem ersten bzw. zweiten Verriegelungselement drehbeweglich ausgestaltet sein.

Erfindungsgemäß bevorzugt ist, dass die Schutzabdeckung über eine Rückstellkraft, wie Federkraft, Schwerkraft, Pneumatikkraft und/oder dergleichen, insbesondere im Normalbetrieb des Tiegels, ohne Kontakt mit einem zu schützenden Gegenstand, wie der Hand einer Bedienperson oder dergleichen, über das erste bzw. zweite Verriegelungselement zur Abdekkung desselben gehalten ist.

Erfindungsgemäß kann auch vorgesehen sein, dass die Schutzabdeckung, insbesondere in Abhängigkeit von der Position des Deckels, vorzugsweise über die Steuer- und/oder Regeleinheit, automatisch bewegbar ist.

Mit der Erfindung wird auch ein Gargerät mit einem oben beschriebenen Tiegel vorgeschlagen.

Der Erfindung liegt somit die überraschende Erkenntnis zugrunde, dass durch die Bereitstellung einer bewegbaren, vorzugsweise drehbaren, Schutzabdeckung für zumindest das erste Verriegelungselement an dem bewegbaren, vorzugsweise verschwenkbaren, Deckel eines Tiegels die Verletzungsgefahr von Bedienpersonen insoweit minimiert bzw. verhindert wird, als dass diese Schutzabdeckung zumindest vor Eingriff des ersten Verriegelungselements in das zweite Verriegelungselement an dem Tiegel einen solchen Schutz bereitstellt, dass beispielsweise ein Finger einer Bedienperson nicht zwischen das erste und zweite Verriegelungselement gelangen und eingeklemmt werden kann, indem die Bedienperson zuerst in Kontakt mit der bewegbaren Schutzabdeckung derart kommt, dass der Finger rechtzeitig vor Angriff des ersten Verriegelungselements aus dem Gefahrenbereich in Reaktion auf besagten, spürbaren ersten Kontakt mit der Schutzabdeckung entfernt werden kann.

Weitere Merkmale und Vorteile der Erfindung ergeben sich aus der nachfolgenden detaillierten Beschreibung einer bevorzugten Ausführungsform anhand der beigefügten schematischen Zeichnungen. Dabei zeigt:
- Figur 1: ein erstes Verriegelungselement für einen erfindungsgemäßen Tiegel mit einer Schutzabdeckung; und
- Figur 2: einen erfindungsgemäßen Tiegel mit einem darauf klappbaren und verschließbaren Deckel mit einem Verriegelungsmechanismus in Schnittansicht.

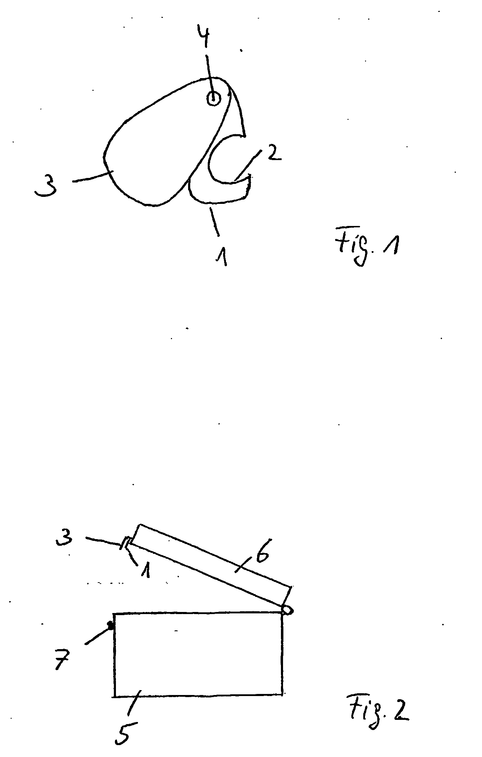

Figur 1 zeigt ein erstes Verriegelungselement in der Form eines Hakens 1, der eine Ausnehmung 2 aufweist, mit welcher ein zweites Verriegelungselement, beispielsweise in der Form eines Bolzens oder Stifts umgegriffen werden kann, um beispielsweise einen Deckel, an dem der Haken 1 befestigt ist, mit einem Tiegel, an dem das zweite Verriegelungselement befestigt ist, zu verschließen. Über dem Haken 1 ist eine Schutzabdeckung 3 vorgesehen, die in der in Figur 1 gezeigten Form, in Anpassung an die Form des Hakens 1, bevorzugt einen Dackelohr nahe kommt. Der Haken 1 und die Schutzabdeckung 3 können über einen gemeinsamen Achsstift 4 an einem Deckel befestigt werden. Die Schutzabdeckung 3 ist so ausgebildet, dass sie, wenn der Haken 1 hinter der Schutzabdeckung 3 liegt, diesen Haken 1 im Wesentlichen vollständig abdeckt, zumindest bezüglich der Breitseite des Hakens 1. Die Schutzabdeckung 3 ist bevorzugt eine im wesentlichen flache Platte, die gegebenenfalls an ihren Rändern leicht in Richtung auf den Haken 1 zu umgebogen sein kann, um die Schutzwirkung der Schutzabdekkung 3 noch zu erhöhen, damit ein Finger einer Bedienperson nicht zwischen den Verrriegelungselementen eingeklemmt werden kann. Die umgebogenen Bereiche der Schutzabdeckung sollten jedoch nicht so ausgeprägt sein, dass eine Drehung der Schutzabdeckung 3 zur Seite zwecks Freigebung des Hakens 1 nicht mehr möglich ist.

Figur 2 zeigt einen erfindungsgemäßen Tiegel 5, an dem ein Deckel 6 über eine Scharniervorrichtung oder dergleichen so befestigt ist, dass der Deckel 6 auf den Tiegel 5 geklappt werden kann, beispielsweise über eine Pneumatik gesteuert. Auf einer Seite des Tiegels 5 ist im oberen Bereich ein zweites Verriegelungselement, wie in Figur 2 gezeigt in der Form eines Bolzens 7, angeordnet. An dem Deckel 6 befindet sich an einer Außenseite ein Haken 1, der mit einer Schutzabdeckung 3 abgedeckt ist.

Beim Schließen des Deckels 6 auf den Tiegel 5 wird zunächst, entweder manuell oder automatisch, der Deckel 6 in Richtung auf den Tiegel 5 geklappt. Kurz bevor der Deckel 6 den Tiegel 5 verschließt, treffen der Haken 1 sowie die Schutzabdeckung 3 auf den Bolzen 7 auf. Der Haken 1 wird dann durch Angriff an den Bolzen 7 seitlich etwas ausgelenkt werden, also relativ zur Schutzabdeckung 3 um den Achsstift 4 gedreht, so dass bei einer weiteren Bewegung des Deckels 6 auf den Tiegel 5 der Haken 1 mit dem Bolzen 7 in Eingriff kommt und somit einen sicheren Verschluss des Tiegels 5 mit dem Deckel 6 ermöglicht.

Die Schutzabdeckung 3 kann so ausgestaltet sein, dass sie ebenfalls auf den Bolzen 7 trifft und auch etwas ausgelenkt wird zur Seite, um einen Eingriff des Hakens 1 mit dem Bolzen 7 zu ermöglichen. Bei einem vollständigen Verschluss wäre die Schutzabdeckung 3 dann stets ein wenig zur Seite ausgelenkt. Beim anschließenden Öffnen des Verschlusses, beispielsweise über eine zu betätigende Öffnungsvorrichtung (nicht gezeigt) oder durch erneutes seitliches Auslenken des Hakens 1, und darauf folgenden Hochheben des Deckels 6 wird die Schutzabdeckung 3 wieder so zurückschwenken, dass der Haken 1 von dieser Schutzabdeckung 3 wieder im Wesentlichen vollständig abgedeckt wird. Beispielsweise kann hier eine Rückstellfeder (nicht gezeigt) für die Schutzabdeckung 3 vorgesehen sein, so dass die Schutzabdeckung 3 sich im Wesentlichen von alleine wieder über den Haken 1 legt bzw. schiebt. Ebenfalls ist es möglich, dass die Schutzabdeckung 3 so ausgebildet ist, dass sie bei einem Eingriff des Hakens 1 mit dem Bolzen 7 so weit vor diesem Verriegelungsmechanismus vorsteht, dass sie ohne seitlich ausgelenkt zu werden, sowohl den Hacken 1 als auch den Bolzen 7 bei Verschluß des Tiegels 5 mit dem Deckel 6 vollständig abdeckt. Auch hier kann beispielsweise eine Rückstelleinheit (nicht gezeigt) vorgesehen sein, um bei einem seitlichen Verschieben der Schutzabdeckung 3, nämlich durch einen unbeabsichtigten Kontakt durch eine Bedienperson, ein Zurückbewegen in die abdeckende Position zu ermöglichen.

In einer alternativen Ausführungsform kann vorgesehen sein, dass sich der Haken an dem Tiegel und der Bolzen an dem Deckel befindet, wobei eine Schutzabdeckung dann ebenfalls über dem Haken an dem Tiegel anzuordnen ist.

Die in der vorstehenden Beschreibung, in den Zeichnungen sowie in den Ansprüchen offenbarten Merkmale der Erfindung können sowohl einzeln als auch in jeder beliebigen Kombination zur Verwirklichung der Erfindung in ihren verschiedenen Ausführungsformen wesentlich sein.

### Bezugszeichenliste

- 1: Haken
- 2: Ausnehmung
- 3: Schutzabdeckung
- 4: Achsstift
- 5: Tiegel
- 6: Deckel
- 7: Bolzen

## Patentansprüche

1. Tiegel (5) mit einem darauf bewegbaren, insbesondere klappbaren oder verschwenkbaren, und verschließbaren Deckel (6), insbesondere für ein Gargerät, mit einem Verriegelungsmechanismus, wobei zumindest ein erstes Verriegelungselement (1) an dem Deckel (6) und zumindest ein zweites Verriegelungselement (7) an dem Tiegel (5) in zueinander in Eingriff bringbarer Anordnung angebracht sind, **dadurch gekennzeichnet, dass** zumindest das erste oder das zweite Verriegelungselement (1) eine gegenüber diesem Verriegelungselement bewegbare Schutzabdeckung (3) aufweist, durch die das erste bzw. zweite Verriegelungselement (1) zumindest bei geöffnetem Deckel (6) abgedeckt und bei geschlossenem Deckel (6) ein Angriff des ersten Verriegelungselements (1) an das zweite Verriegelungselement (7) ermöglicht ist, wobei das erste und zweite Verriegelungselement (1, 7) auf einer Außenseite des Tiegels (5) bzw. des Deckels (6) angeordnet sind.

2. Tiegel nach Anspruch 1, **dadurch gekennzeichnet, dass**
das erste Verriegelungselement als ein Haken (1), ein Schnapper oder dergleichen, und das zweite Verriegelungselement als ein Vorsprung, wie ein Bolzen (7), ein Stift oder dergleichen, oder als eine Aussparung ausgeformt ist, oder das zweite Verriegelungselement als ein Haken, ein Schnapper oder dergleichen, und das erste Verriegelungselement als ein Vorsprung, wie ein Bolzen, ein Stift oder dergleichen, oder als eine Ausnehmung ausgeformt ist.

3. Tiegel nach einem der vorangehenden Ansprüche, **dadurch gekennzeichnet, dass**
die Schutzabdeckung (3) im Wesentlichen die Form einer flachen Platte, insbesondere mit einer an die Außenkontur des ersten bzw. zweiten Verriegelungselements (1) angepaßten Außenkontur, aufweist, wobei die Form eines Dackelohres bevorzugt ist.

4. Tiegel nach einem der vorangehenden Ansprüche, **dadurch gekennzeichnet, dass** die Schutzabdeckung (3) zumindest das erste bzw. zweite Verriegelungselement (1) vollständig abdeckt.

5. Tiegel nach einem der vorangehenden Ansprüche, **dadurch gekennzeichnet, dass** die Schutzabdeckung (3) das erste bzw. zweite Verriegelungselement (1) bei geschlossenem Deckel (6) freigibt.

6. Tiegel nach einem der vorangehenden Ansprüche, **dadurch gekennzeichnet, dass** der Deckel (6) manuell oder automatisch, vorzugsweise über eine Steuer- und/oder Regeleinheit, bewegbar ist.

7. Tiegel nach einem der vorangehenden Ansprüche, **dadurch gekennzeichnet, dass** das erste bzw. zweite Verriegelungselement (1) und die Schutzabdeckung (3) über einen gemeinsamen Achsstift (4) an dem Deckel (6) befestigt sind.

8. Tiegel nach einem der vorangehenden Ansprüche, **dadurch gekennzeichnet, dass** die Schutzabdeckung (3) gegenüber dem ersten bzw. zweiten Verriegelungselement (1) drehbeweglich ausgestaltet ist.

9. Tiegel nach einem der vorangehenden Ansprüche, **dadurch gekennzeichnet, dass** die Schutzabdeckung (3) über eine Rückstellkraft, wie Federkraft, Schwerkraft, Pneumatikkraft und/oder dergleichen, insbesondere im Normalbetrieb des Tiegels, ohne Kontakt mit einem zu schützenden Gegenstand, wie der Hand einer Bedienperson oder dergleichen, über das erste bzw. zweite Verriegelungselement (1) zur Abdeckung desselben gehalten ist.

10. Tiegel nach einem der vorangehenden Ansprüche, **dadurch gekennzeichnet, dass** die Schutzabdeckung (3), insbesondere in Abhängigkeit von der Position des Deckels (6), vorzugsweise über die Steuer- und/oder Regeleinheit, automatisch bewegbar ist.

11. Gargerät mit einem Tiegel nach einem der Ansprüche 1 bis 10.

## Claims

1. A pan (5) with a lid (6) movable thereon, particularly a hingeable or pivotable, and closable lid, particularly for a cooking appliance, with a locking mechanism, wherein at least one first locking element (1) is mounted on the lid (6) and at least one second locking element (7) is mounted on the pan (5) in an arrangement in which they can be brought into engagement with one another, **characterised in that** at least the first or the second locking element (1) has/have a protective cover (3) which is movable relatively to that locking element and by means of which the first or second locking element (1) is/are covered at least when the lid (6) is open and engagement of the first locking element (1) on the second locking element (7) is rendered possible when the lid (6) is closed, the first and second locking elements (1, 7) being disposed on an outside of the pan (5) and lid (6) respectively.

2. A pan according to claim 1, **characterised in that** the first locking element is formed as a hook (1), a catch or the like and the second locking element is formed as a projection, such as a bolt (7), a pin or the like, or as a recess, or the second locking element is formed as a hook, a catch or the like, and the first locking element is formed as a projection, such as a bolt, a pin or the like, or as a recess.

3. A pan according to any one of the preceding claims, **characterised in that** the protective cover (3) has substantially the form of a flat plate, particularly with an outer contour adapted to the outer contour of the first and second locking element (1), the form of a dachshund ear being preferred.

4. A pan according to any one of the preceding claims, **characterised in that** the protective cover (3) completely covers at least the first or second locking element (1).

5. A pan according to any one of the preceding claims, **characterised in that** the protective cover (3) releases the first or second locking element (1) when the lid (6) is closed.

6. A pan according to any one of the preceding claims, **characterised in that** the lid (6) is movable manually or automatically, preferably by way of an open and/or closed loop control unit.

7. A pan according to any one of the preceding claims, **characterised in that** the first or second locking element (1) and the protective cover (3) are fixed on the lid (6) by means of a common pin (4).

8. A pan according to any one of the preceding claims, **characterised in that** the protective cover (3) is rotationally movable relatively to the first or second locking element (1).

9. A pan according to any one of the preceding claims, **characterised in that** the protective cover (3) is held over the first or second locking element (1) to cover the first or locking element (1) by means of a resetting force, such as spring force, gravity, pneumatic force and/or the like, particularly in normal operation of the pan, without contact with anything requiring protection, such as the hand of an operator or the like.

10. A pan according to any one of the preceding claims, **characterised in that** the protected cover (3) is automatically movable, particularly in dependence on the position of the lid (6), preferably by way of the open and/or closed loop control unit.

11. A cooking appliance having a pan according to any one of claims 1 to 10.

## Revendications

1. Creuset (5) avec un couvercle (6) déplaçable sur celui-ci, en particulier rabattable ou pouvant pivoter, et refermable, en particulier pour un appareil de cuisson, avec un mécanisme de verrouillage, au moins un premier élément de verrouillage (1) étant monté sur le couvercle (6) et au moins un deuxième élément de verrouillage (7) étant monté sur le creuset (5) en un agencement pouvant être mis mutuellement en prise, **caractérisé en ce qu'**au moins le premier ou le deuxième élément de verrouillage (1) présente un recouvrement protecteur (3) déplaçable par rapport à cet élément de verrouillage, recouvrement protecteur au moyen duquel le premier ou le deuxième dispositif de verrouillage (1) est couvert, au moins lorsque le couvercle (6) est ouvert et, lorsque le couvercle (6) est fermé, une action du premier élément de verrouillage (1) sur le deuxième élément de verrouillage (7) étant rendue possible, le premier et le deuxième éléments de verrouillage (1, 7) étant disposés en face extérieure du creuset (5), respectivement du couvercle (6).

2. Creuset selon la revendication 1, **caractérisé en ce que**
le premier élément de verrouillage est réalisé sous la forme d'un crochet (1), d'un encliqueteur ou analogue, et le deuxième élément de verrouillage est réalisé sous la forme d'une saillie, tel qu'un boulon (7), une tige ou analogue, ou creusé sous forme d'un évidement, ou bien le deuxième élément de verrouillage est réalisé sous la forme d'un crochet, d'un encliqueteur ou analogue, et le premier élément de verrouillage est réalisé sous la forme d'une saillie, tel qu'un boulon, une tige ou analogue, ou bien creusé sous forme d'un évidement.

3. Creuset selon l'une des revendications précédentes, **caractérisé en ce que**
le recouvrement protecteur (3) présente essentiellement la forme d'une plaque plate, en particulier avec un contour extérieur adapté au contour extérieur du premier ou du deuxième élément de verrouillage (1), la forme d'une oreille de teckel étant alors préférée.

4. Creuset selon l'une des revendications précédentes, **caractérisé en ce que**
le recouvrement protecteur (3) couvre complètement au moins le premier ou le deuxième élément de verrouillage (1).

5. Creuset selon l'une des revendications précédentes, **caractérisé en ce que**
le recouvrement protecteur (3) libère le premier ou le deuxième élément de verrouillage (1) lorsque le couvercle (6) est fermé.

6. Creuset selon l'une des revendications précédentes, **caractérisé en ce que**
le couvercle (6) est déplaçable, manuellement ou automatiquement, de préférence par l'intermédiaire d'une unité de commande et/ou de régulation.

7. Creuset selon l'une des revendications précédentes, **caractérisé en ce que**
le premier ou le deuxième élément de verrouillage (1) et le recouvrement protecteur (3) sont fixés sur le couvercle (6) par l'intermédiaire d'une tige formant axe commune.

8. Creuset selon l'une des revendications précédentes, **caractérisé en ce que**
le recouvrement protecteur (3) est réalisé avec une mobilité en rotation par rapport au premier ou au deuxième élément de verrouillage (1).

9. Creuset selon l'une des revendications précédentes, **caractérisé en ce que**
le recouvrement protecteur (3) est maintenu, par l'intermédiaire d'une force de rappel, telle qu'une force élastique, la force de la gravité, une force pneumatique et/ou analogue, en particulier lorsque le creuset (1) est en fonctionnement normal, sans contact avec un objet à protéger, telle que la main d'un opérateur ou analogue, au-dessus du premier ou du deuxième élément de verrouillage (1), pour recouvrir celui-ci.

10. Creuset selon l'une des revendications précédentes, **caractérisé en ce que**
le recouvrement protecteur (3) est déplaçable automatiquement, en particulier en fonction de la position du couvercle (6), de préférence par l'unité de commande et/ou de régulation.

11. Appareil de cuisson, comprenant un creuset selon l'une des revendications 1 à 10.
